# EUROPEAN PATENT APPLICATION

(11) **EP 1 519 595 A1**
(43) Date of publication of application: **30.03.2005**
(21) Application number: 03256114.4
(22) Date of filing: 29.09.2003
(51) Int. Cl.: H04Q 7/00

(54) **Apparatus and method for responding to a cell/URA update confirm message using a correct C-RNTI in universal mobile telecommunications system user equipment**

(71) Applicant: M-Stack Limited, Birmingham B1 2RX (GB)
(72) Inventor: Farnsworth, Andrew John, Bromsgrove, Worcestershire, B60 1HW (GB); Pedlar, David Winstone, Solihull, West Midlands, B91 3FB (GB)
(74) Representative: Hibbert, Juliet Jane Grace

(57) **Abstract**

The details of an apparatus and method for responding to a cell or URA update confirm message with a correct C-RNTI information element are disclosed herein. When a UE receives a Cell or URA Update Confirm message from a UTRAN, it determines whether a response is required prior to entering the state specified in the message. If a response is required it uses the new C-RNTI element to send the response, if this element is available.

## Description

### BACKGROUND

### TECHNICAL FIELD

This application relates to UMTS (Universal Mobile Telecommunications System) in general, and to an apparatus and method for responding to a cell/ura update confirm message using a correct c-rnti in universal mobile telecommunications system user equipment in particular.

### DESCRIPTION OF THE RELATED ART

UMTS is a third generation public land mobile telecommunication system. Various standardization bodies are known to publish and set standards for UMTS, each in their respective areas of competence. For instance, the 3GPP (Third Generation Partnership Project) has been known to publish and set standards for GSM (Global System for Mobile Communications) based UMTS, and the 3GPP2 (Third Generation Partnership Project 2) has been known to publish and set standards for CDMA (Code Division Multiple Access) based UMTS. Within the scope of a particular standardization body, specific partners publish and set standards in their respective areas.

Consider a wireless mobile device, generally referred to as user equipment (UE), that complies with the 3GPP specifications for the UMTS protocol. The 3GPP 25-331 specification, v.3.15.0, referred to herein as the 25-331 specification, addresses the subject of UMTS RRC (Radio Resource Control) protocol requirements between the UMTS Terrestrial Radio Access Network (UTRAN) and the UE.

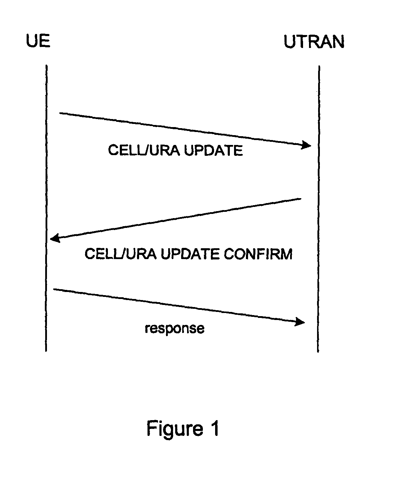

In accordance with section 8.3.1 of the 25-331 specification, the UE may initiate a Cell Update procedure by sending a CELL UPDATE message to the UTRAN. For example, events requiring a cell update to be invoked are defined in section 8.3.1.2 of the 25-331 specification and include the conditions of radio link failure, re-entering service area, RLC unrecoverable error, cell reselection and periodical cell update. In response to receipt of the CELL UPDATE message, the UTRAN sends a CELL UPDATE CONFIRM message to the UE, which may in turn require a response from the UE, for example a UTRAN MOBILITY INFORMATION CONFIRM message. This exchange of messages is illustrated in Figure 1. Analogous provisions for initiating a URA Update procedure, for receiving a URA UPDATE CONFIRM message and for sending a response to the UTRAN if required, are also set out in section 8.3.1 of the 25-331 specification.

The CELL/URA UPDATE CONFIRM message includes an Information Element (IE) "RRC State Indicator", which indicates a new state for the UE. If the CELL/URA UPDATE CONFIRM message is placing the UE into the "CELL_PCH" or "URA_PCH" states, then the response needs to be sent prior to making the state transition into those states.

The 25-331 specification defines the requirements for the transmission of a response message to the UTRAN in the following two places, among others.

Section 8.2.2.4 defines transmission of a response message to the UTRAN where the UE has received a reconfiguration message. This specifies that if the new state is CELL_PCH or URA_PCH, the response message shall be transmitted using the old configuration before the state transition, but the new cell RNTI (C-RNTI) shall be used if the information element (IE) "New C-RNTI" was included in the received reconfiguration message. The C-RNTI information element is defined in section 10.3.3.8 of the 25-331 specification, and is used to identify a UE having a RRC connection within a cell.

In contrast to section 8.2.2.4, section 8.3.1.7 deals with the case of transmission of a response message to the UTRAN after receipt of a CELL UPDATE CONFIRM/URA UPDATE CONFIRM message. This specifies that if the new state is CELL_PCH or URA_PCH, the response message shall be transmitted in the CELL_FACH state. This suggests that the New C-RNTI should not be used in the conditions of section 8.3.1.7.

### SUMMARY

The inventors have determined that, in some cases, the use of the existing C-RNTI will cause problems. The solution to these problems is to use the new C-RNTI whenever it is provided, so deviating from the requirements of the 25-331 specification.

It is an object of the present application that an apparatus and method according to the invention may enable the UE to always use a new C-RNTI whenever provided, in providing a response to a cell or URA update confirm message.

According to one aspect of the present invention, there is provided a method of responding to a Cell or URA Update Confirm message received in a user equipment in a communications system, the method comprising the steps of receiving a Cell or URA Update Confirm message, determining whether the message places the user equipment in a state that requires a response prior to entering the state, determining whether the message contains a new C-RNTI element and in the event that a response is required and that the message contains a new C-RNTI element, using the element to send a response message.

According to a further aspect of the invention, there is provided user equipment for providing a response to a Cell or URA Update Confirm message in a communications system, the equipment comprising means for receiving a Cell or URA Update Confirm message, means for determining whether the message places the user equipment in a state that requires a response prior to entering the state, means for determining whether the message contains a new C-RNTI element, and in the event that a response is required and that the message contains a new C-RNTI element, means for sending a response message using the new C-RNTI element.

Other aspects and features of the present invention will become apparent to those ordinarily skilled in the art upon review of the following description of specific embodiments of an apparatus and method for providing a response to a cell or URA update confirm message received in a UMTS user equipment.

### BRIEF DESCRIPTION OF THE DRAWINGS

Embodiments of the present invention will now be described, by way of example only, with reference to the attached drawings, in which:
Figure 1 illustrates a cell/URA update procedure in a UMTS system;
Figure 2 is a block diagram illustrating an embodiment of a protocol stack apparatus provided with a cell/URA update confirm response handling RRC block, in accordance with the present application;
Figure 3 is a schematic diagram illustrating the control flow in the CUCRH RRC block 200 on receipt of a cell/URA update confirm message at the UE from a UTRAN; and
Figure 4 is a block diagram illustrating a mobile device, which can act as a UE and co-operate with the apparatus and methods of Figures 1 to 3.

The same reference numerals are used in different figures to denote similar elements.

### DETAILED DESCRIPTION OF THE DRAWINGS

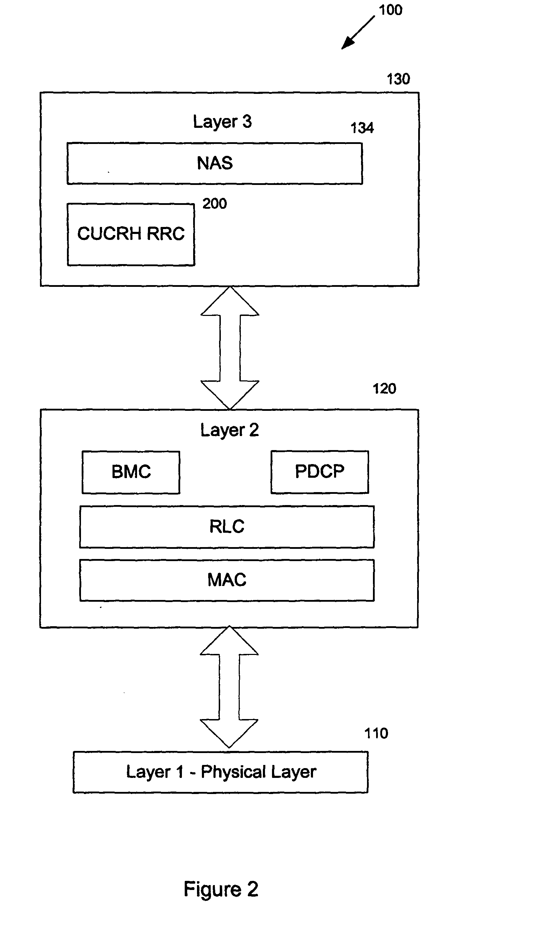

Referring to the drawings, Figure 2 is a block diagram illustrating an embodiment of a protocol stack apparatus provided with a cell/URA update confirm response handling RRC block, in accordance with the present application.

The CUCRH RRC block (Cell/URA Update Confirm Response Handling RRC) 200 is a sub layer of Layer 3 130 of a UMTS protocol stack 100. The CUCRH RRC 200 exists in the control plane only and provides an information transfer service to the non-access stratum NAS 134. The CUCRH RRC 200 is responsible for controlling the configuration of radio interface Layer 1 110 and Layer 2 120. The UTRAN issues a CELL/URA UPDATE CONFIRM message to the UE. The CUCRH RRC 200 layer of the UE decodes this message and initiates the appropriate RRC procedure. The procedure may require the CUCRH RRC 200 to send a response message to the UTRAN (via the lower layers) informing the UTRAN of the outcome of the procedure.

Advantageously, the CUCRH RRC block 200 allows the protocol stack 100 to behave unambiguously when a cell/URA update confirm message is received from the UTRAN.

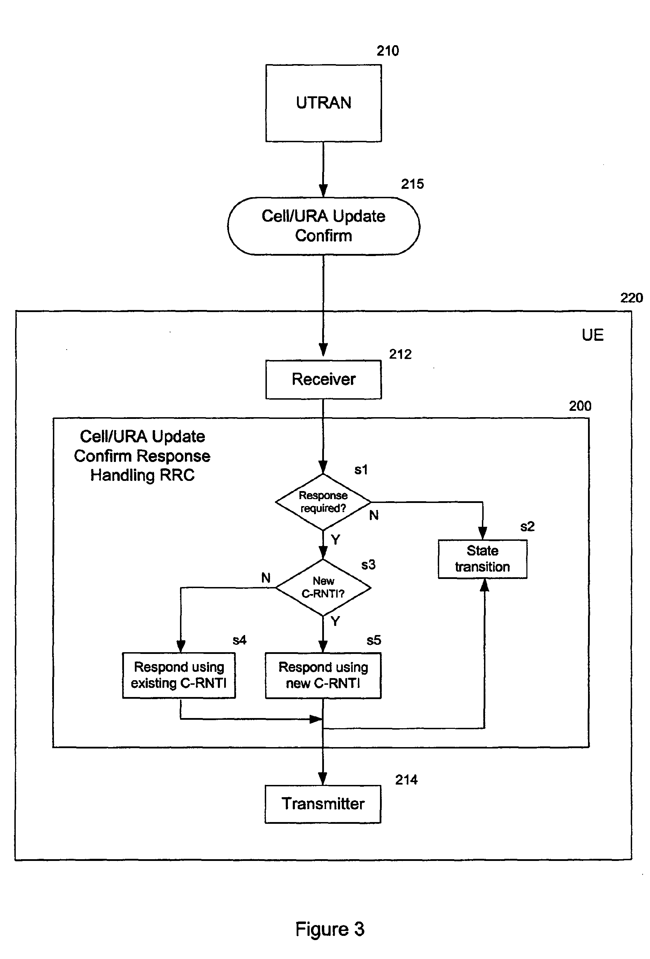

Figure 3 is a schematic diagram illustrating the control flow in the CUCRH RRC block 200 on receipt of a cell/URA update confirm message at the UE from a UTRAN.

The UTRAN 210 sends a CELL or URA UPDATE CONFIRM message 215 which is received by a receiver 212 in the UE 220. The UE determines whether the message places the UE in a state which requires a response prior to entering that state (step s1). If not, it continues with a transition to the specified state (step s2). If the message does place the UE in a state requiring a response, the UE then determines whether the message contains a new C-RNTI (step s3). If not, it responds using the existing C-RNTI (step s4). If the message contains a new C-RNTI, the UE uses this in providing a response (step s5) via the UE transmitter 214. It then carries on with the steps required to enter the specified state (step s2).

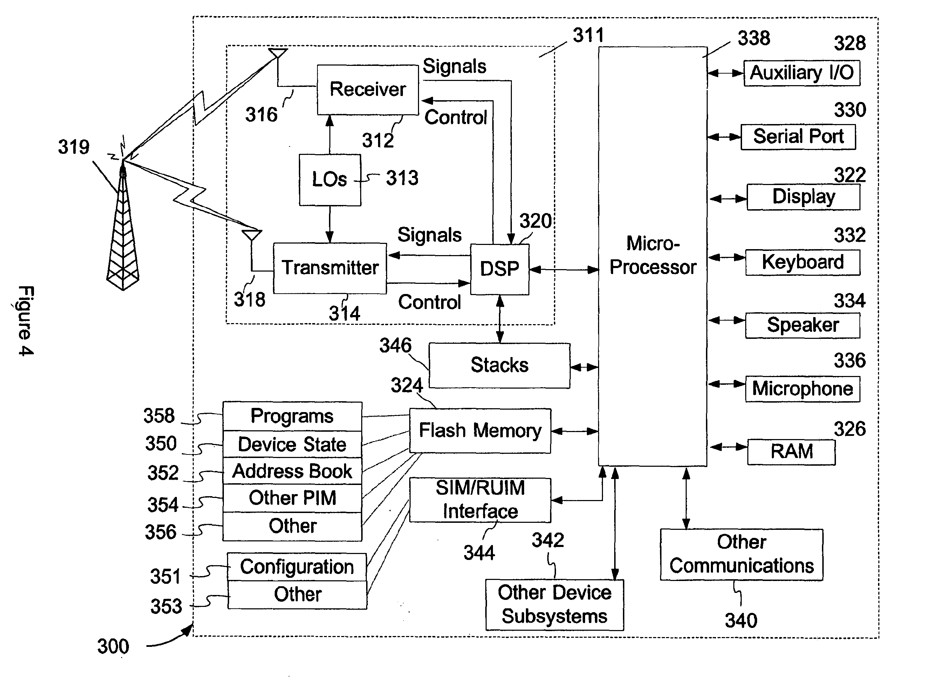

Turning now to Figure 4, Figure 4 is a block diagram illustrating a mobile device, which can act as a UE and co-operate with the apparatus and methods of Figures 1 to 3, and which is an exemplary wireless communication device. Mobile station 300 is preferably a two-way wireless communication device having at least voice and data communication capabilities. Mobile station 300 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 300 is enabled for two-way communication, it will incorporate a communication subsystem 311, including both a receiver 312 and a transmitter 314, as well as associated components such as one or more, preferably embedded or internal, antenna elements 316 and 318, local oscillators (LOs) 313, and a processing module such as a digital signal processor (DSP) 320. As will be apparent to those skilled in the field of communications, the particular design of the communication subsystem 311 will be dependent upon the communication network in which the device is intended to operate. For example, mobile station 300 may include a communication subsystem 311 designed to operate within the Mobitex^{TM} mobile communication system, the DataTAC™ mobile communication system, a GPRS network, a UMTS network, or an EDGE network.

Network access requirements will also vary depending upon the type of network 319. For example, in the Mobitex and DataTAC networks, mobile station 300 is registered on the network using a unique identification number associated with each mobile station. In UMTS and GPRS networks, however, network access is associated with a subscriber or user of mobile station 300. A GPRS mobile station therefore requires a subscriber identity module (SIM) card in order to operate on a GPRS network. Without a valid SIM card, a GPRS mobile station will not be fully functional. Local or non-network communication functions, as well as legally required functions (if any) such as "911" emergency calling, may be available, but mobile station 300 will be unable to carry out any other functions involving communications over the network 300. The SIM interface 344 is normally similar to a card-slot into which a SIM card can be inserted and ejected like a diskette or PCMCIA card. The SIM card can have approximately 64K of memory and hold many key configuration 351, and other information 353 such as identification, and subscriber related information.

When required network registration or activation procedures have been completed, mobile station 300 may send and receive communication signals over the network 319. Signals received by antenna 316 through communication network 319 are input to receiver 312, which may perform such common receiver functions as signal amplification, frequency down conversion, filtering, channel selection and the like, and in the example system shown in Figure 4, analog to digital (A/D) conversion. A/D conversion of a received signal allows more complex communication functions such as demodulation and decoding to be performed in the DSP 320. In a similar manner, signals to be transmitted are processed, including modulation and encoding for example, by DSP 320 and input to transmitter 314 for digital to analog conversion, frequency up conversion, filtering, amplification and transmission over the communication network 319 via antenna 318. DSP 320 not only processes communication signals, but also provides for receiver and transmitter control. For example, the gains applied to communication signals in receiver 312 and transmitter 314 may be adaptively controlled through automatic gain control algorithms implemented in DSP 320.

Mobile station 300 preferably includes a microprocessor 338 which controls the overall operation of the device. Communication functions, including at least data and voice communications, are performed through communication subsystem 311. Microprocessor 338 also interacts with further device subsystems such as the display 322, flash memory 324, random access memory (RAM) 326, auxiliary input/output (I/O) subsystems 328, serial port 330, keyboard 332, speaker 334, microphone 336, a short-range communications subsystem 340 and any other device subsystems generally designated as 342.

Some of the subsystems shown in Figure 4 perform communication-related functions, whereas other subsystems may provide "resident" or on-device functions. Notably, some subsystems, such as keyboard 332 and display 322, for example, may be used for both communication-related functions, such as entering a text message for transmission over a communication network, and device-resident functions such as a calculator or task list.

Operating system software used by the microprocessor 338 is preferably stored in a persistent store such as flash memory 324, which may instead be a read-only memory (ROM) or similar storage element (not shown). Those skilled in the art will appreciate that the operating system, specific device applications, or parts thereof, may be temporarily loaded into a volatile memory such as RAM 326. Received communication signals may also be stored in RAM 326.

As shown, flash memory 324 can be segregated into different areas for both computer programs 358 and program data storage 350, 352, 354 and 356. These different storage types indicate that each program can allocate a portion of flash memory 324 for their own data storage requirements. Microprocessor 338, in addition to its operating system functions, preferably enables execution of software applications on the mobile station. A predetermined set of applications that control basic operations, including at least data and voice communication applications for example, will normally be installed on mobile station 300 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 319. In a preferred embodiment, the PIM data items are seamlessly integrated, synchronized and updated, via the wireless network 319, with the mobile station user's corresponding data items stored or associated with a host computer system. Further applications may also be loaded onto the mobile station 300 through the network 319, an auxiliary I/O subsystem 328, serial port 330, short-range communications subsystem 340 or any other suitable subsystem 342, and installed by a user in the RAM 326 or preferably a nonvolatile store (not shown) for execution by the microprocessor 338. Such flexibility in application installation increases the functionality of the device and may provide enhanced on-device functions, communication-related functions, or both. For example, secure communication applications may enable electronic commerce functions and other such financial transactions to be performed using the mobile station 300.

In a data communication mode, a received signal such as a text message or web page download will be processed by the communication subsystem 311 and input to the microprocessor 338, which preferably further processes the received signal for output to the display 322, or alternatively to an auxiliary I/O device 328. A user of mobile station 300 may also compose data items such as email messages for example, using the keyboard 332, which is preferably a complete alphanumeric keyboard or telephone-type keypad, in conjunction with the display 322 and possibly an auxiliary I/O device 328. Such composed items may then be transmitted over a communication network through the communication subsystem 311.

For voice communications, overall operation of mobile station 300 is similar, except that received signals would preferably be output to a speaker 334 and signals for transmission would be generated by a microphone 336. Alternative voice or audio I/O subsystems, such as a voice message recording subsystem, may also be implemented on mobile station 300. Although voice or audio signal output is preferably accomplished primarily through the speaker 334, display 322 may also be used to provide an indication of the identity of a calling party, the duration of a voice call, or other voice call related information for example.

Serial port 330 in Figure 4, would normally be implemented in a personal digital assistant (PDA)-type mobile station for which synchronization with a user's desktop computer (not shown) may be desirable, but is an optional device component. Such a port 330 would enable a user to set preferences through an external device or software application and would extend the capabilities of mobile station 300 by providing for information or software downloads to mobile station 300 other than through a wireless communication network. The alternate download path may for example be used to load an encryption key onto the device through a direct and thus reliable and trusted connection to thereby enable secure device communication.

Other communications subsystems 340, such as a short-range communications subsystem, is a further optional component which may provide for communication between mobile station 300 and different systems or devices, which need not necessarily be similar devices. For example, the subsystem 340 may include an infrared device and associated circuits and components or a Bluetooth^{TM} communication module to provide for communication with similarly enabled systems and devices.

When mobile device 300 is used as a UE, protocol stacks 346 include an apparatus and method for responding to a cell/ura update confirm message using a correct c-rnti in universal mobile telecommunications system user equipment.

The above-described embodiments of the present application are intended to be examples only. Those of skill in the art may effect alterations, modifications and variations to the particular embodiments without departing from the scope of the application as defined by the appended claims.

## Claims

1. A method of responding to a Cell or URA Update Confirm message received in a user equipment in a communications system, the method comprising the steps of:
receiving a Cell or URA Update Confirm message;
determining whether the message places the user equipment in a state that requires a response prior to entering the state;
determining whether the message contains a new C-RNTI element; and
in the event that a response is required and that the message contains a new C-RNTI element, using the element to send a response message.

2. A method according to claim 1, further comprising, in the event that the message does not contain a new C-RNTI element, using an existing C-RNTI element to send the response message.

3. A method according to claim 1 or 2, comprising entering the state after sending the response message.

4. A method according to any one of the preceding claims, wherein the state comprises the CELL_PCH or URA_PCH state.

5. User equipment for providing a response to a Cell or URA Update Confirm message in a communications system, the equipment comprising:
means for receiving a Cell or URA Update Confirm message;
means for determining whether the message places the user equipment in a state that requires a response prior to entering the state;
means for determining whether the message contains a new C-RNTI element; and
in the event that a response is required and that the message contains a new C-RNTI element, means for sending a response message using the new C-RNTI element.

6. User equipment according to claim 5, wherein in the event that the message does not contain a new C-RNTI element, using an existing C-RNTI element for sending the response message.
